# EUROPÄISCHE PATENTSCHRIFT

(11) **EP 1 676 061 B1**
(45) Veröffentlichungstag und Bekanntmachung des Hinweises auf die Patenterteilung: **23.07.2008**
(21) Anmeldenummer: 04766858.7
(22) Anmeldetag: 28.09.2004
(51) Int. Cl.: F16K 1/226

(54) **DROSSELKLAPPENSTUTZEN**
THROTTLE VALVE SUPPORT
CORPS DE PAPILLON

(30) Priorität: 22.10.2003 DE 10349024
(43) Veröffentlichungstag der Anmeldung: 05.07.2006
(73) Patentinhaber: Continental Automotive GmbH, 30165 Hannover (DE)
(72) Erfinder: HANNEWALD, Thomas, 64347 Griesheim (DE)
(86) Internationale Anmeldenummer: PCT/EP2004/052332
(87) Internationale Veröffentlichungsnummer: WO 2005/040653

(56) Entgegenhaltungen:
- EP-A- 0 200 868
- AU-B- 447 291
- GB-A- 2 247 301
- US-A- 4 290 615

## Beschreibung

Die Erfindung bezieht sich auf einen Drosselklappenstutzen mit einem rohrartigen Gehäuse, in dem eine Drosselklappe auf einer senkrecht zur Strömungsrichtung im rohrartigen Gehäuse angeordneten Drosselklappenwelle befestigt ist, wobei die Drosselklappenwelle einseitig oder zweiseitig an mindestens einem Lager drehbar gelagert ist und das rohrartige Gehäuse eine umlaufende Nut aufweist, in der eine umlaufende Dichtung angeordnet ist, die im Zustand des durch die Drosselklappe geschlossenen Drosselklappenstutzens an der Außenkante der Drosselklappe anliegt.

Drosselklappenstutzen sind bekannt. In der DE 195 12 874 A1 wird ein Drosselklappenstutzen beschrieben, der ein rohrartiges Gehäuse aufweist. Die Drosselklappe im Inneren dieses Gehäuses ist dabei auf einer Drosselklappenwelle befestigt, die quer zur Längsachse des rohrartigen Gehäuses an ihren freien Enden durch Ausnehmungen in der Gehäusewand hindurchführend und in Lagern drehbar gelagert ist. Im geschlossenen Zustand trennt die Drosselklappe das Gehäuse in eine Saugseite und in eine Seite, in der Umgebungsdruck herrscht. Bei diesen bekannten Drosselklappenstutzen ist nachteilig, dass durch den in der Saugseite anliegenden Unterdruck eine größere Menge an Leckluft über die Kante der Drosselklappe in die Saugseite gelangen kann, was nicht erwünscht ist.

Aus der US-A-4 290 615 ist ein Drosselklappenventil der eingangs genannten Art bekannt, bei dem die umlaufende Dichtung ein flacher Metallring ist.

Ein Drosselklappenventil der eingangs genannten Art ist auch aus der AU 447 291 B bekannt, wobei die umlaufende Dichtung zumindest an ihrer Abströmseite radiale Nuten besitzt, wodurch während des Öffnens oder Schließens ein Druckausgleich zwischen Anström- und Abströmseite der Ventilklappe erreicht werden soll.

Aus der EP-A-0 200 868 ist ein Klappenventil der eingangs genannten Art bekannt, bei dem die umlaufende Dichtung ein einteiliger Dichtungsring aus einem Gummimaterial oder einem Kunststoffmaterial frei von Unterbrechungen oder Durchbrüchen ist.

Der Erfindung liegt daher die Aufgabe zugrunde, einen Drosselklappenstutzen zu schaffen, durch den das nachteilige Einströmen von Leckluft zur Saugseite des Luftkanals weitgehend vermieden wird.

Die der Erfindung zugrunde liegende Aufgabe wird dadurch gelöst, dass die umlaufende Dichtung ein Toleranzring aus Kunststoff ist, der einen Spalt aufweist.

Die Befestigung der Drosselklappe an der Drosselklappenwelle kann beispielsweise durch eine Schraubverbindung oder durch Kleben erfolgen. Unter der einseitigen bzw. zweiseitigen Lagerung der Drosselklappenwelle ist eine Lagerung an einem oder an beiden Enden der Drosselklappenwelle zu verstehen. Das mindestens eine Lager ist dabei im rohrartigen Gehäuses angeordnet. Sofern eine zweiseitige Lagerung der Drosselklappenwelle realisiert wird, ist die eigentliche Drosselklappe bei einer senkrecht zur Strömungsrichtung im rohrartigen Gehäuse angeordneten Drosselklappenwelle schräg zu ihrer Längsachse anzuordnen. Die umlaufende Dichtung kann derart ausgebildet sein, dass sie die umlaufende Nut im rohrartigen Gehäuse vollständig ausfüllt. Dies kann dann realisiert werden, wenn eine zweiseitige Lagerung der Drosselklappenwelle realisiert wird. In vielen Fällen ist es jedoch vorteilhaft, die umlaufende Dichtung durch einen Spalt zu unterbrechen. Dies ist sogar dann erforderlich, wenn die Drosselklappenwelle lediglich einseitig drehbar gelagert ist. Der Spalt der umlaufenden Dichtung muss dann mindestens dem Durchmesser der Drosselklappenwelle entsprechen, die dann auch genau in diesem Spalt positioniert wird. Das Anliegen der umlaufenden Dichtung an der Außenkante der Drosselklappe im geschlossenen Zustand des Drosselklappenstutzens erfolgt unter einem Anpressdruck. Dieser ist dadurch gewährleistet, dass die umlaufende Dichtung entsprechend dimensioniert wird, was durch ingenieurmäßige Berechnung erfolgt.

Es hat sich in überraschender Weise gezeigt, dass das nachteilige Einströmen von Leckluft zur Saugseite des Luftkanals weitgehend vermieden wird. Die Drosselklappe selbst kann einfach und kostengünstig gestaltet sein. Auch die Montage der umlaufenden Dichtung ist relativ einfach möglich. Der durch die umlaufende Dichtung nach längeren Betriebszeiten verursachte Verschleiß ist lediglich an der Drosselklappe und nicht am rohrartigen Gehäuse zu verzeichnen. Bei größerem Verschleiß muss somit lediglich die im Vergleich zum rohrartigen Gehäuse preiswerte Drosselklappe ausgetauscht werden, was den Einsatz von verschleißfesteren Materialien kostengünstig vereinfacht.

Der Toleranzring aus Kunststoff kann dabei beispielsweise aus Polytetrafluorethylen bestehen. Er ist in der Regel als Flachring ausgeführt. Beim Abschließen der Saugseite des Luftkanals wird die Innenseite des Toleranzringes gegen die Außenkante der Drosselklappe gedrückt, so dass sich der Spalt geringfügig vergrößert. Die dadurch im Toleranzring entstehende Spannung drückt den Toleranzring gegen die Außenkante der Drosselklappe, was ein dichtes Abschließen zur Saugseite des Luftkanals bewirkt.

Nach einer bevorzugten Ausgestaltung der Erfindung weist die Drosselklappe mittig einen Hülsenabschnitt auf, der innen komplementär zur Drosselklappenwelle ausgebildet ist. Unter der komplementären Ausbildung ist zu verstehen, dass die Drosselklappenwelle und der Hülsenabschnitt jeweils in Abhängigkeit ingenieurmäßig derart ausgelegt werden, dass die Drosselklappenwelle in den Hülsenabschnitt eingeschoben werden kann. Nach optimaler konstruktiver Auslegung ist dadurch eine Befestigung der Drosselklappe an der Drosselklappenwelle durch Reibschluss möglich, so dass auf zusätzliche Befestigungsmittel in vorteilhafter Weise verzichtet werden kann.

Die Erfindung wird nachfolgend anhand der Zeichnung (Fig. 1 bis Fig. 5) näher und beispielhaft erläutert.
- Fig. 1: zeigt einen Drosselklappenstutzen mit einseitig gelagerter Drosselklappenwelle im Längsschnitt.
- Fig. 2: zeigt den Drosselklappenstutzen gemäß Fig. 1 im Längsschnitt in dreidimensionaler Form.
- Fig. 3: zeigt eine Drosselklappe in dreidimensionaler Darstellung.
- Fig. 4: zeigt einen Drosselklappenstutzen mit zweiseitig gelagerter Drosselklappenwelle im Längsschnitt.
- Fig. 5: zeigt den Drosselklappenstutzen gemäß Fig. 4 im Längsschnitt in dreidimensionaler Darstellung.

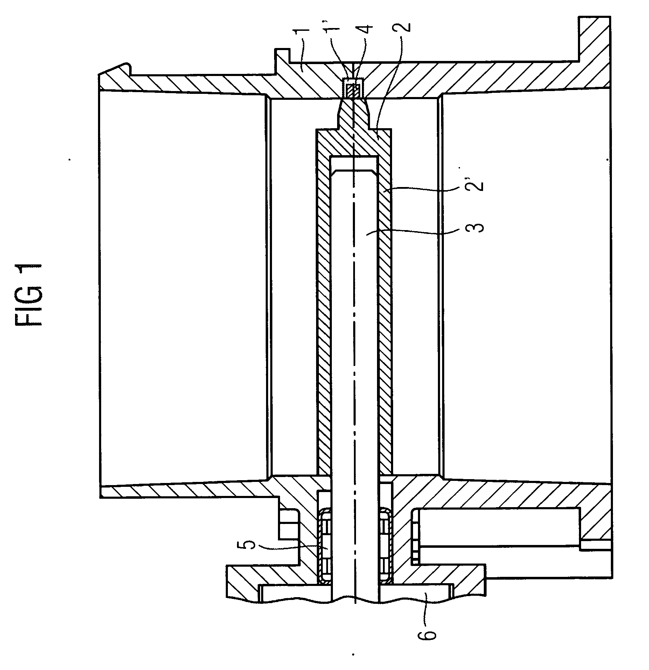

In Fig. 1 ist ein Drosselklappenstutzen mit einem rohrartigen Gehäuse 1 im Längsschnitt dargestellt. In dem rohrartigen Gehäuse 1 ist eine Drosselklappe 2 auf einer senkrecht zur Strömungsrichtung im rohrartigen Gehäuse 1 angeordneten Drosselklappenwelle 3 befestigt. Die Drosselklappenwelle 3 ist einseitig an einem Lager 5 drehbar gelagert. Das Lager 5 ist im rohrartigen Gehäuse 1 benachbart zum vereinfacht dargestellten Stellantrieb 6 angeordnet, der die Drosselklappenwelle 3 in eine Drehbewegung versetzt. Das rohrartige Gehäuse 1 weist eine umlaufende Nut 1' auf, in der eine umlaufende Dichtung 4 angeordnet ist, die im Zustand des durch die Drosselklappe 2 geschlossenen Drosselklappenstutzens an der Außenkante der Drosselklappe 2 anliegt. Als umlaufende Dichtung 4 kann in besonders vorteilhafter Weise beispielsweise ein flacher Metallring angeordnet sein, der einen Spalt aufweist. In diesem Spalt wird dann die Drosselklappenwelle 3 durchlaufend angeordnet. Die Drosselklappe 2 weist mittig einen Hülsenabschnitt 2' auf, der innen komplementär zur Drosselklappenwelle 3 ausgebildet ist. Dadurch kann die Drosselklappenwelle 3 bei der Montage in den Hülsenabschnitt 2' eingeschoben und durch Reibschluss mit der Drosselklappe 2 befestigt werden.

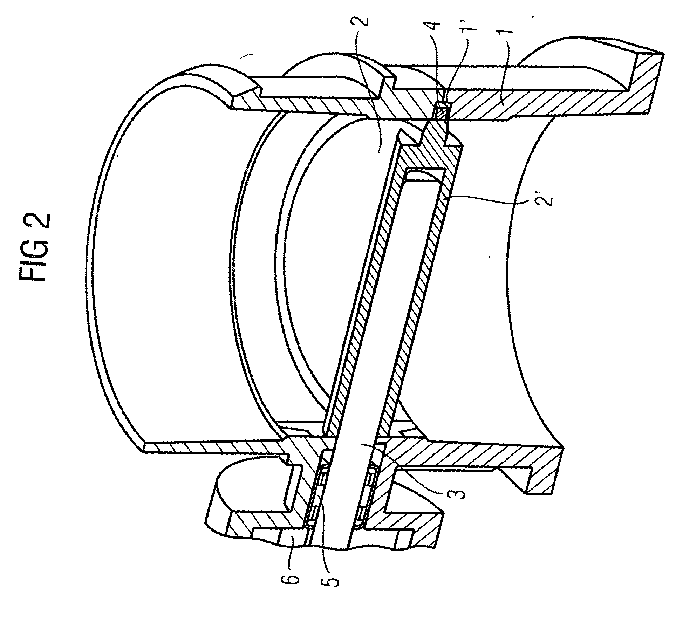

In Fig. 2 ist der Drosselklappenstutzen gemäß Fig. 1 im Längsschnitt dreidimensional dargestellt.

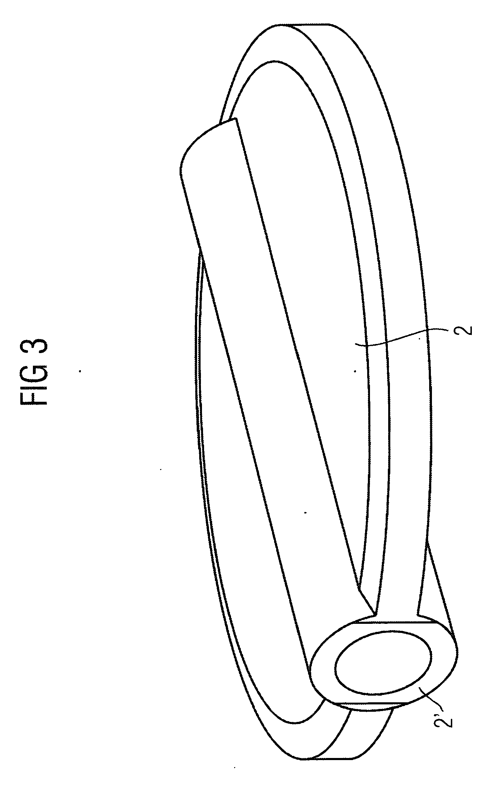

In Fig. 3 ist die Drosselklappe 2 mit dem Hülsenabschnitt 2' dreidimensional dargestellt. Diese Drosselklappe 2 ist ebenfalls für eine Drosselklappenwelle (nicht dargestellt) geeignet, die einseitig drehbar gelagert ist.

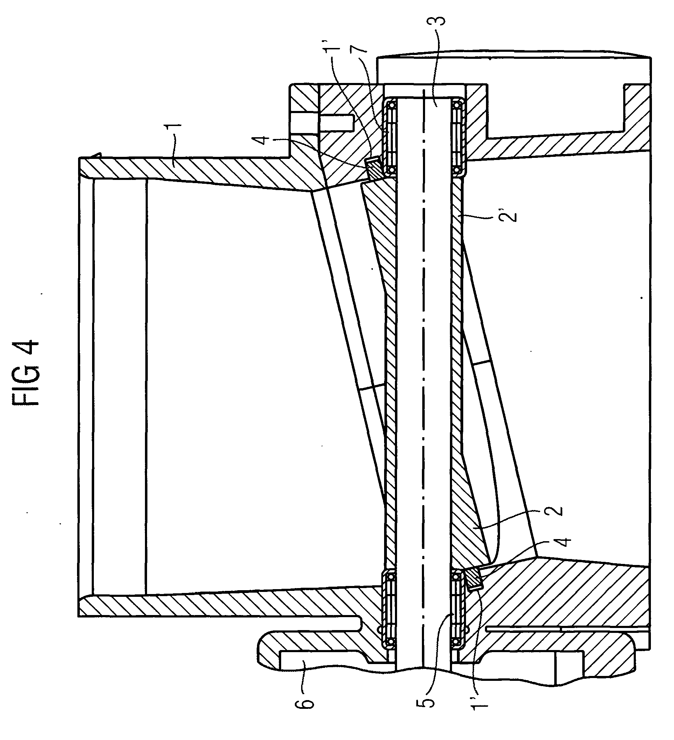

In Fig. 4 ist ein Drosselklappenstutzen im Längsschnitt mit einer Drosselklappenwelle 3 dargestellt, die zweiseitig an einem Lager 5 und an einem anderen Lager 7 drehbar gelagert ist. Auch das andere Lager 7 ist im rohrartigen Gehäuse 1 angeordnet. Bei dieser zweiseitigen Lagerung der Drosselklappenwelle 3 ist es erforderlich, dass die Drosselklappe 2 gegenüber der Längsachse der Drosselklappenwelle 3 eine Schrägstellung aufweist. Dabei ist jedoch besonders vorteilhaft, dass die umlaufende Dichtung 4 vollständig ohne Spalt konstruktiv gestaltet sein kann, was beispielsweise bei Dichtungsmaterialien aus Kunststoffen vorteilhaft und gewünscht ist. Beispielsweise kommen dann elastische Gummimischungen zum Einsatz.

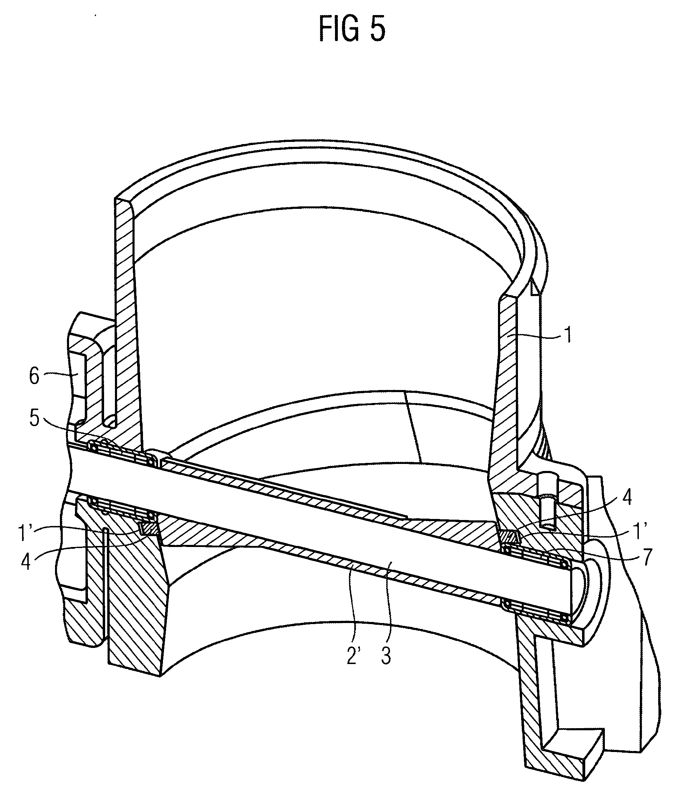

In Fig. 5 ist der Drosselklappenstutzen gemäß Fig. 4 im Längsschnitt dreidimensional dargestellt. Der Hülsenabschnitt 2' der Drosselklappe 2 verläuft durchgängig, so dass die Drosselklappenwelle 3 vollständig durch diesen Hülsenabschnitt 2' geschoben und anschließend mit der Drosselklappe 2, gegebenenfalls allein durch Reibschluss, verbunden werden kann. Es ist jedoch auch möglich, beispielsweise Schrauben oder Nieten als Befestigungsmittel einzusetzen.

## Patentansprüche

1. Drosselklappenstutzen mit einem rohrartigen Gehäuse (1), in dem eine Drosselklappe (2) auf einer senkrecht zur Strömungsrichtung im rohrartigen Gehäuse (1) angeordneten Drosselklappenwelle (3) befestigt ist, wobei die Drosselklappenwelle (3) einseitig oder zweiseitig an mindestens einem Lager (5, 7) drehbar gelagert ist und das rohrartige Gehäuse (1) eine umlaufende Nut (1') aufweist, in der eine umlaufende Dichtung (4) angeordnet ist, die im Zustand des durch die Drosselklappe (2) geschlossenen Drosselklappenstutzens an der Außenkante der Drosselklappe (2) anliegt, **dadurch gekennzeichnet, dass** die umlaufende Dichtung (4) ein Toleranzring aus Kunststoff ist, der einen Spalt aufweist.

2. Drosselklappenstutzen nach Anspruch 1, **dadurch gekennzeichnet, dass** die Drosselklappe (2) mittig einen Hülsenabschnitt (2') aufweist, der innen komplementär zur Drosselklappenwelle (3) ausgebildet ist.

## Claims

1. Throttle valve support with a tubular housing (1) in which a throttle valve (2) is secured on a throttle valve shaft (3) arranged perpendicular to the direction of flow in the tubular housing (1), the throttle valve shaft (3) being mounted rotatably on one side or two sides of at least one bearing (5, 7) and the tubular housing (1) having an encircling groove (1') in which there is an encircling seal (4) which is applied to the external edge of the throttle valve (2) when the throttle valve support is closed by the throttle valve (2), **characterized in that** the encircling seal (4) is a plastic tolerance ring which has a gap.

2. Throttle valve support according to Claim 1, **characterized in that** the throttle valve (2) has a sleeve section (2') in the centre which is designed on the inside in a complementary manner to the throttle valve shaft (3).

## Revendications

1. Tubulure à papillon de régulation des gaz comportant un corps (1) en forme de tube, dans lequel un papillon (2) de régulation des gaz est fixé sur un arbre (3) de papillon de régulation des gaz, lui-même monté dans le corps (1) en forme de tube perpendiculairement à la direction d'écoulement des gaz, où l'arbre (3) de papillon de régulation des gaz est suspendu en rotation d'un seul côté ou de deux côtés dans au moins un palier (5, 7) et où le corps (1) en forme de tube comporte une rainure périmétrique (1'), dans laquelle est placé un joint (4) périmétrique, lequel, dans la position où le papillon (2) de régulation des gaz ferme la tubulure à papillon de régulation des gaz, est appliqué sur l'arête extérieure du papillon (2) de régulation des gaz, **caractérisée par le fait que** le joint (4) périmétrique est une bague de tolérance en matière plastique qui comporte une fente.

2. Tubulure à papillon de régulation des gaz selon la revendication 1, **caractérisée par le fait que** le papillon (2) de régulation des gaz comporte en son milieu une section de douille (2') qui est, sur sa face intérieure, complémentaire à l'arbre (3) du papillon de régulation des gaz.
